# EUROPÄISCHE PATENTANMELDUNG

(11) **EP 1 533 748 A1**
(43) Veröffentlichungstag der Anmeldung: **25.05.2005**
(21) Anmeldenummer: 03405831.3
(22) Anmeldetag: 20.11.2003
(51) Int. Cl.: G06K 19/077

(54) **Einrichtung zum elektronischen Aufzeichnen bestimmter Daten, insbesondere für einzelne Funktionseinheiten einer Kaffeemaschine**

(71) Anmelder: Steiner AG Weggis, 6353 Weggis (CH)
(72) Erfinder: In-Albon, Jean-Paul, CH-1957 Ardon (CH)
(74) Vertreter: Luchs, Willi

(57) **Zusammenfassung**

Eine Einrichtung zum elektronischen Aufzeichnen bestimmter Daten, insbesondere für einzelne Funktionseinheiten einer Kaffeemaschine (1), umfasst einen mit einer Datenquelle einerseits und einer Leseeinheit (15) anderseits wirkverbundenen Transponder-Chip (13). Die Einrichtung weist wenigstens zwei in einer Black Box (10a) integrierte, galvanisch voneinander getrennte Spulen (11, 12) auf, von denen die erste Spule (11) elektrisch mit einer die Datenquelle bildenden, bestimmte Funktionsvorgänge bzw. Zeitabläufe registrierenden Steuereinheit (5) verbunden ist. Der Transponder-Chip (13) ist ebenfalls in der Black Box (10a) integriert und an die zweite Spule (12) angeschlossen, die elektromagnetisch mit der ersten Spule (11) wirkverbunden ist. Dies ermöglicht eine optimale Wartung der Kaffeemaschine, so dass bestimmten Defekten weitgehend vorgebeugt werden kann.

## Beschreibung

Die Erfindung betrifft eine Einrichtung zum elektronischen Aufzeichnen bestimmter Daten, insbesondere für einzelne Funktionseinheiten einer Kaffeemaschine, gemäss dem Oberbegriff des Anspruches 1.

Als solche Einrichtungen können beispielsweise Transponder betrachtet werden, die vielerorts, z.B. in der Nachrichtentechnik, verwendet werden, und die einerseits von einer Datenquelle bzw. Sendeeinheit Signale empfangen und anderseits die Signale evtl. verstärkt an eine Leseeinheit liefern.

Der vorliegenden Erfindung liegt die Aufgabe zugrunde, eine Einrichtung der eingangs genannten Art zu schaffen, die es ermöglicht, bestimmte Funktionsvorgänge bzw. Zeitabläufe an bestimmten Funktionseinheiten insbesondere einer Kaffeemaschine zu registrieren, und in einfacher Weise zu speichern und auszuwerten.

Diese Aufgabe wird erfindungsgemäss durch eine Einrichtung mit den Merkmalen des Anspruches 1 gelöst.

Weitere bevorzugte Ausgestaltungen der erfindungsgemässen Einrichtung bilden den Gegenstand der abhängigen Ansprüche.

Durch die erfindungsgemässe Einrichtung mit zwei in einer Black Box integrierten, galvanisch voneinander getrennten Spulen, von denen die erste Spule elektrisch, via Kabel, mit einer die Datenquelle bildenden, bestimmte Funktionsvorgänge bzw. Zeitabläufe registrierenden Steuereinheit (CPU) verbunden ist, wobei der Transponder-Chip ebenfalls in der Black Box integriert und an die zweite, mit der ersten Spule elektromagnetisch wirkverbunden Spule angeschlossen ist, können die entsprechenden Daten kodiert besonders einfach beispielsweise einzelnen, an verschiedenen Funktionseinheiten einer Kaffeemascheine angebrachten Einrichtungen übermittelt, unter Zusammenwirkung der beiden Spulen auf dem Transponder-Chip gespeichert, und von der Leseeinheit zur Auswertung abgelesen werden. Die aufgezeichneten Daten ermöglichen eine optimale Wartung der Kaffeemaschine, so dass bestimmten Defekten weitgehend vorgebeugt werden kann. Die Lebensdauer der einzelnen Funktionseinheiten kann dadurch wesentlich erhöht und die Kosten für Ersatzmodule reduziert werden. Die Überwachung und Administration von Service-Arbeiten ist wesentlich vereinfacht. Zudem können die Daten statistisch erfasst und die Service-Dienste weltweit vereinheitlicht werden.

Die Erfindung wird nachfolgend anhand der Zeichnung näher erläutert. Es zeigt:

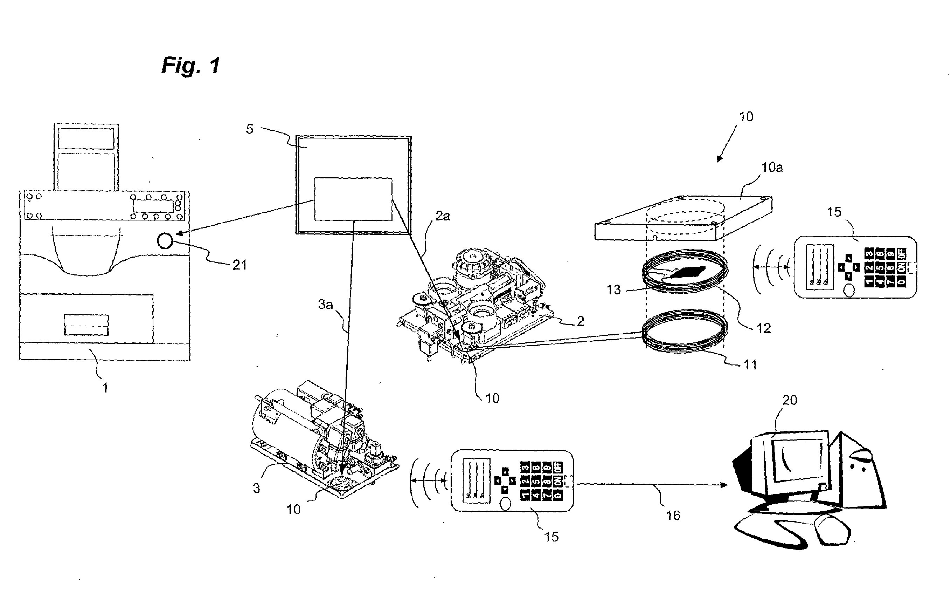

- Fig. 1: ein Blockschema einer Kaffemaschine mit der erfindungsgemässen Einrichtung.

In Fig. 1 ist eine Kaffeemaschine 1 schematisch angedeutet, die bekanntlich aus mehreren Funktionseinheiten besteht, wie z.B. einer Extraktionsvorrichtung zur Erzeugung des Kaffees, einer Einrichtung zur Erzeugung von Milchschaum, einer Heisswasser- und Dampfversorgung, einem Auffangbehälter etc., die vorzugsweise voneinander unabhängige Module bilden. Im Blockschema nach Fig. 1 sind zwei solche Funktionseinheiten, nämlich die Extraktionsvorrichtung 2 und die Heisswasser- und Dampfversorgung 3 dargestellt. Diese Funktionseinheiten sind an sich bekannt, und werden daher in ihrem Aufbau und Funktion nicht näher beschrieben.

An den einzelnen Funktionseinheiten werden diverse Funktionsvorgänge bzw. Zeitabläufe gemessen und entsprechende Daten in einer zentralen Steuereinheit (CPU-central processing unit) 5 erfasst. So wird beispielsweise bei der Extraktionsvorrichtung 2 zur Erzeugung des Kaffees die Anzahl von Motoreinschaltungen für den Antrieb eines Brühzylinders und/oder der Mühlen, die Anzahl von Ventilöffnungen für die Heisswasserzufuhr, das Auswechseln eines bestimmten Teiles etc. registriert. Bei der Heisswasser- und Dampfversorgung 3 kann z.B. der Wasserverbrauch für die Kaffeerzeugung, den Tee, oder für die Dampferzeugung registriert oder Druck- und/oder Temperaturverläufe gemessen werden.

Die ermittelten Daten werden von der zentralen Steuereinheit 5 kodiert an erfindungsgemässe Einrichtungen 10 zum elektronischen Aufzeichnen dieser Daten gesendet, die an den einzelnen Funktionseinheiten angebracht sind. Die Einrichtungen 10 sind als sogenannte Black Box 10a mit darin integrierten Bauteilen ausgebildet. Jede Einrichtung 10 weist eine erste Spule 11 auf, die für den Empfang von den kodierten Daten vorgesehen ist, und die jeweils über ein Kabel 2a, 3a mit der Steuereinheit 5 elektrisch verbunden ist. Ferner beinhaltet die Black Box 10a eine zweiten Spule 12, die elektromagnetisch mit der ersten Spule 11 verbunden ist, und an die ein Transponder-Chip 13 angeschlossen ist. Der Transponder-Chip 13 ist als EEPROM (electrically erasable programmable read-only-memory) ausgebildet und mit einer Leseeinheit 15 wirkverbunden, durch welche einerseits die auf dem Transponder-Chip 13 gespeicherten Daten abgelesen und anderseits wieder gelöscht bzw. auf ein Null-Wert zurückgestellt werden können. Nach dem Löschen kann der Transponder-Chip 13 wiederbeschrieben werden.

Wie in Fig. 1 schematisch angedeutet, können die durch die Leseeinheit 15 erfassten Daten via eine Netzverbindung 16, z.B. über USB-Verbindungen oder - und vorzugsweise - über das Internet, an einen Computer 20 zur Auswertung weitergeleitet werden.

Der Zugang zu den Daten soll nur berechtigten Personen gewährleistet werden, wozu die Kaffeemaschine mit einem berechtigenden Identifizierungssystem 21, vorzugsweise einem Leser von berührungslos wirkenden oder einsteckbaren Identifizierungskarten, ausgestattet ist.

Die aufgezeichneten Daten ermöglichen eine optimale Wartung der Kaffeemaschine 1, so dass bestimmten Defekten weitgehend vorgebeugt werden kann. Die Lebensdauer der einzelnen Funktionseinheiten kann dadurch wesentlich erhöht und die Kosten für Ersatzmodule reduziert werden. Die Überwachung und Administration der Service-Arbeiten ist wesentlich vereinfacht. Zudem können die Daten statistisch erfasst und die Service-Dienste weltweit vereinheitlicht werden. Es können beispielsweise Daten eines 5-Jahre-Betriebes der Kaffeemaschine oder Daten betreffend 2,5 Mio Zyklen erfasst und statistisch ausgewertet werden.

Dadurch, dass die einzelnen, als Black Box ausgestalteten Einrichtungen 10 über Kabel 2a, 3a mit der zentralen Steuereinheit (CPU) 5 verbunden sind, die bestimmte Funktionsvorgänge bzw. Zeitabläufe registriert, können die entsprechenden Daten kodiert besonders einfach den einzelnen Einrichtungen 10 übermittelt, unter Zusammenwirkung der beiden Spulen 11, 12 auf dem Transponder-Chip 13 gespeichert, und von der Leseeinheit 15 (oder den Leseeinheiten 15) zwecks entsprechenden Auswertens abgelesen werden.

Im Prinzip könnte die Einrichtung auch drei oder noch mehr in einer Black Box integrierte, galvanisch voneinander getrennte Spulen aufweisen, von denen die erste Spule elektrisch mit der Steuereinheit (CPU) eine zweite auch mit dieser CPU oder mit einer weiteren Steuereinheit und die dritte an den Transponder-Chip ebenfalls in der Black Box verbunden ist.

## Patentansprüche

1. Einrichtung zum elektronischen Aufzeichnen bestimmter Daten, insbesondere für einzelne Funktionseinheiten einer Kaffeemaschine (1), umfassend einen mit einer Datenquelle einerseits und einer Leseeinheit (15) anderseits wirkverbundenen Transponder-Chip (13), **dadurch gekennzeichnet, dass**
die Einrichtung wenigstens zwei in einer Black Box (10a) integrierte, galvanisch voneinander getrennte Spulen (11, 12) aufweist, von denen die erste Spule (11) elektrisch mit einer die Datenquelle bildenden, bestimmte Funktionsvorgänge bzw. Zeitabläufe registrierenden Steuereinheit (CPU) (5) verbunden ist, wobei der Transponder-Chip (13) ebenfalls in der Black Box (10a) integriert und an die zweite Spule (12) angeschlossen ist, die elektromagnetisch mit der ersten Spule (11) wirkverbunden ist.

2. Einrichtung nach Anspruch 1, **dadurch gekennzeichnet, dass** der Transponder-Chip (13) ist als EEPROM (electrically erasable programmable read-only-memory) ausgebildet ist.

3. Einrichtung nach Anspruch 2, **dadurch gekennzeichnet, dass** die auf dem Transponder-Chip (13) gespeicherten Daten mittels einer Leseeinheit (15) ablesbar sind.

4. Einrichtung nach Anspruch 2 oder 3, **dadurch gekennzeichnet, dass** die auf dem Transponder-Chip (13) gespeicherten Daten löschbar und der Transponder-Chip (13) wiederbeschreibbar ist.

5. Verwendung der Einrichtung nach einem der Ansprüche 1 bis 5 für eine mehrere Funktionseinheiten aufweisende Kaffeemaschine, **dadurch gekennzeichnet, dass** einzelne Funktionseinheiten (2, 3) mit eigenen, via Kabel (2a, 3a) an die Steuereinheit (CPU) (5) angeschlossenen und als Black Box (10a) ausgestalteten Einrichtungen (10) versehen sind.
